# EUROPEAN PATENT APPLICATION

(11) **EP 1 316 668 A1**
(43) Date of publication of application: **04.06.2003**
(21) Application number: 02380239.0
(22) Date of filing: 22.11.2002
(51) Int. Cl.: E06C 7/08, F16C 11/10, E04H 4/14

(54) **A rung for ladders**

(30) Priority: 29.11.2001 ES 200102901 U
(71) Applicant: Metalast, S.A. (Sociedad Unipersonal), 08213 Polinya, (Barcelona) (ES)
(72) Inventor: Planas Valls, Carles, c/o Metalast S.A., 08213 Polinya (Barcelona) (ES)
(74) Representative: Pastells Teixido, Manuel

(57) **Abstract**

This rung for ladders is provided to be secured at its ends to two sidepieces, and is characterised in that it comprises at said ends means allowing to secure the rung in a horizontal plane being arranged in different angulations with respect to the plane being defined by the sidepieces. Said securing means comprise an intermediary member between the sidepiece and the rung, this latter being arranged in a horizontal plane irrespective of the angular position of the sidepieces.

On its side facing the rung end said intermediary member has a slightly tapered trunnion of circular cross-section fitting into an also slightly tapered pocket being provided in the rung end and also having a circular cross-section.

## Description

Although this rung can be applied to any type of ladder, it will be preferentially used for ladders to be installed in swimming pools.

For this application rungs of several models are known which generally consist in a plate being secured at its ends to the ladder's sidepieces. In all of these known models the rung is secured in one only position, so that its ends have to be prepared in such a way as to be arranged in a horizontal arrangement once having been fitted to the sidepieces.

Generally this means that a rung can only be secured to those sidepieces being arranged in a given arrangement. Thus for example a rung being provided to be secured to upright sidepieces cannot be used for being secured to inclined or bent sidepieces since the rung would not in such a case be arranged in a correct horizontal arrangement.

It is the object of this invention to provide a rung being apt to in a practical way be fitted to different arrangements of the sidepieces of the ladder thereby being always arranged in a horizontal plane.

The rung does for such a purpose comprise at its ends means allowing to secure it to the sidepieces in a horizontal plane being arranged in different angulations with respect to the plane being defined by both sidepieces.

These securing means comprise an intermediary member to be fitted between the sidepiece and the rung.

On its side facing the rung end said intermediary member has a slightly tapered trunnion of circular cross-section fitting into an also slightly tapered pocket being provided in the rung end and also having a circular cross-section.

The periphery of each of said trunnion and said pocket will be advantageously formed with a longitudinal, mutually mating serration.

These and other characteristics will be best made apparent by the following detailed description whose understanding will be made easier by the accompanying sheet of drawings showing a practical embodiment cited only by way of an example not limiting the scope of the present invention.

In the drawings:
Fig. 1 illustrates in a perspective view the intermediary member and the rung end;
Fig. 2 shows in a sectional view the securing of the rung to the sidepiece; and
Figs. 3 and 4 represent in a cross-sectional view the securing of the rung to an upright and an inclined sidepiece, respectively.

According to the drawings the rung (1) is secured to the sidepieces (2) of a ladder by means of an intermediary member (3) being of a generally cylindrical shape and having its side facing the sidepiece (2) of circular cross-section formed with a concave recess (4) mating with said circular cross-section so that said member (3) can be snugly fitted to the sidepiece (2).

On its side facing the end of the rung (1) this member (3) has a slightly tapered trunnion (5) of circular cross-section having its periphery formed with a longitudinal serration (6).

The rung (1) has at each of its ends a circular, also slightly tapered pocket (7) having its inner periphery formed with a longitudinal serration (8) mating with the serration (6) of the trunnions (5).

The rung (1) is secured at each of its ends to the sidepieces (2) by means of a bolt (9) extending through the sidepiece (2), the intermediary member (3) and the end of the rung (1), these three members being for such a purpose provided with the corresponding bores (10). The bolts (9) are tightened by means of a nut (11) with the interposition of a washer (12).

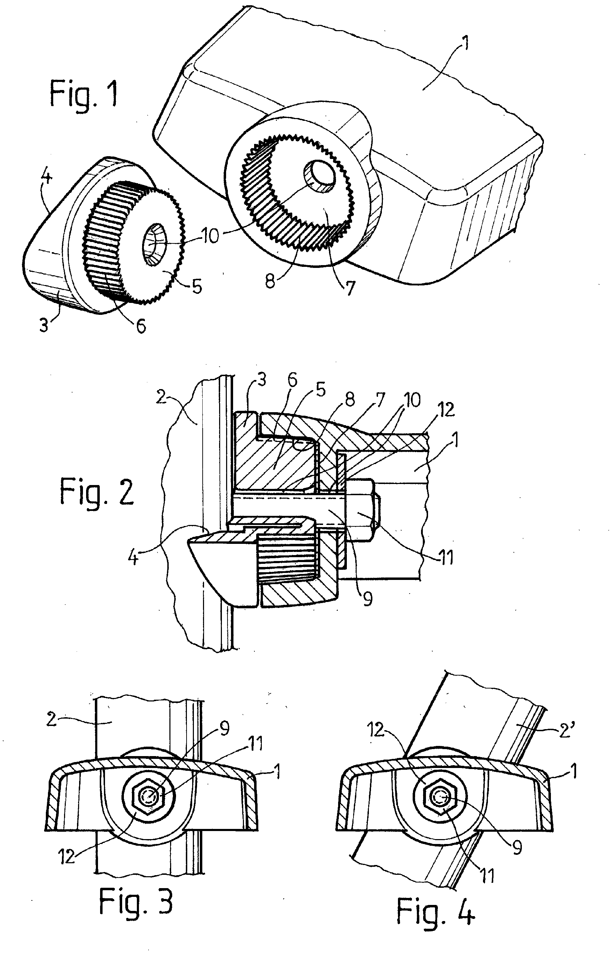

It will be appreciated that the fitting of the rung (1) to the intermediary members (3) allows said rung to be horizontally secured in different angulations with respect to the sidepieces (2) as can be seen in Figs. 3 and 4, in such a way that the rung (1) will be always arranged in the correct horizontal arrangement irrespective of the arrangement of the sidepieces (2) or (2')

The invention can within its essentiality be put into practice in other embodiments differing only in detail from that having been set forth only by way of example.

## Claims

1. A rung for ladders of the type being secured at its ends to two sidepieces (2), **characterised in that** it comprises at its ends means (3) allowing to secure the rung (1) in a horizontal plane being arranged in different angulations with respect to the plane being defined by the sidepieces (2).

2. A rung for ladders as per claim 1, **characterised in that** the means being used to secure the rung to the sidepieces comprise an intermediary member (3) between the sidepiece (2) and the rung (1), this latter being arranged in a horizontal plane irrespective of the angular position of the sidepieces (2).

3. A rung for ladders as per claims 1 and 2, **characterised in that** on its side facing the end of the rung (1) said intermediary member (3) has a slightly tapered trunnion (5) of circular cross-section fitting into an also slightly tapered pocket (7) being provided in the end of the rung (1) and also having a circular cross-section.

4. A rung for ladders as per claims 1 through 3, **characterised in that** the periphery of each of said trunnion (5) of the intermediary member (3) and said pocket (7) is advantageously formed with a longitudinal, mutually mating serration (6, 8).

5. A rung for ladders as per claims 1 and 2, **characterised in that** the end of the rung (1) and the intermediary member (3) are provided with an axial bore (10) for the passage of the bolt (9) being used to secure the rung (1) to the sidepiece (2).

6. A rung for ladders as per claim 2, **characterised in that** the intermediary member (3) has its side facing the sidepiece (2) formed with a recess (4) mating with the cross-section of the sidepiece (2) and thus allowing to fit said intermediary member to said sidepiece.
